# EUROPEAN PATENT APPLICATION

(11) **EP 3 763 592 A1**
(43) Date of publication of application: **13.01.2021**
(21) Application number: 20184451.1
(22) Date of filing: 07.07.2020
(51) Int. Cl.: B61D 19/00, E06B 3/12, E06B 3/82, E06B 3/70

(54) **DOOR LEAF FRAME, DOOR LEAF, AND METHOD OF MANUFACTURING THE DOOR LEAF FRAME**

(30) Priority: 12.07.2019 JP 2019130541
(71) Applicant: NABTESCO CORPORATION, Chiyoda-ku Tokyo 102-0093 (JP)
(72) Inventor: OKAZAKI, Takashi, Tokyo, 102-0093 (JP); NAOKI, Shigeru, Tokyo, 102-0093 (JP); SATO, Koji, Tokyo, 102-0093 (JP); SATO, Kazuma, Tokyo, 102-0093 (JP)
(74) Representative: Grünecker Patent- und Rechtsanwälte PartG mbB

(57) **Abstract**

One object is to provide a door leaf frame (20) capable of easy manufacturing, a door leaf (10), and a method of manufacturing the door leaf frame (20). A door leaf frame (20) includes: two face plates (21, 22) disposed on opposite surface sides of a door leaf (10) so as to be opposed to each other; two side plates (23, 25) each positioned on a lateral side of the door leaf (10) and connected to the two face plates (21, 22) to form a U-shaped section; and two fastening members (24, 26) fastened to the two face plates (21, 22). The face plates (21, 22) and the side plates (23, 25) are positioned relative to each other by projections (23A, 25A) provided on the side plates (23, 25) and holes (21 A, 22A) provided in the face plates (21, 22).

## Description

The present invention relates to a door leaf frame, a door leaf, and a method of manufacturing the door leaf frame.

Conventional door leaves for railroad cars include a door leaf frame constituted by an upper edge frame, a lower edge frame, a leading edge frame, and a trailing edge frame (see, for example, Japanese Utility Model Application Publication No. Hei 4-57481 ("the '481 Publication").

In the door leaf frame disclosed in the '481 Publication, the leading edge frame and the trailing edge frame extend in the vertical direction that is the longitudinal direction of the door leaf, and the upper edge frame and the lower edge frame extend in the horizontal direction that is the transverse direction of the door leaf. The door leaf includes an inside plate and an outside plate both mounted to surfaces of the door leaf frame, the inside plate is mounted to the surface inside the car, and the outside plate is mounted to the surface outside the car.

The door leaf frame as mentioned above includes an aluminum extruded mold or a stainless forming material having a U-shaped section, and therefore, dies are necessary. In plastic working conforming to the shape of a railroad car, the amount of deformation varies depending on variation in characteristics of individual materials, and therefore, a skilled expert needs to modify the works after plastic working so as to satisfy the required accuracy, which requires much labor.

The present invention addresses such circumstances, and one object thereof is to provide a door leaf frame capable of easy manufacturing, a door leaf, and a method of manufacturing the door leaf frame.

A door leaf frame that achieves the above object comprises: two face plates disposed on opposite surface sides of a door leaf so as to be opposed to each other; a side plate positioned on a lateral side of the door leaf and connected to the two face plates to form a U-shaped section; and a fastening member fastened to the two face plates, wherein the face plates and the side plate are positioned relative to each other by a projection and a hole, the projection is provided on one of the side plate and the face plates, and the hole is provided in the other.

With the above configuration, a door leaf frame can be manufactured with a side plate having a desired shape, instead of a molded material that needs to be modified by a skilled expert. In this manufacturing process, the two face plates and the side plate are positioned relative to each other by a projection and a hole, and the two face plates are fastened to a fastening member. Accordingly, the door leaf frame can be manufactured easily.

The door leaf frame is preferably configured such that the hole is provided in the face plates, and the projection is provided on the side plate.

With the above configuration, the face plates, having the hole instead of the projection, can be worked easily. This is advantageous particularly when the face plates extend in the lateral direction of the door leaf beyond the side plates.

The above door leaf frame is preferably configured such that the fastening member and the side plate are positioned relative to each other by a projection and a hole, the projection is provided on one of the fastening member and the side plate, and the hole is provided in the other.

With the above configuration, the fastening member and the side plate are positioned relative to each other by a projection and a hole. Therefore, the fastening member can be inhibited from moving when the two face plates are fastened to the fastening member.

The above door leaf frame is preferably configured such that longitudinal sections of the face plates are curved.

With the above configuration, since the longitudinal sections of the face plates are curved, the door leaf has a curved shape. Therefore, the door leaf frame can be manufactured easily without using molded materials subjected to a bending process in conformity to the curved shape.

The above door leaf frame is preferably configured such that the hole has a wide portion for guiding the projection into the hole.

With the above configuration, when the projection is inserted into the hole, the projection is guided into the hole by the wide portion of the hole. Therefore, the assembling work can be facilitated without a large clearance between the projection and the hole.

The above door leaf frame is preferably configured such that the projection has a guide portion for guiding the projection into the hole.

With the above configuration, when the projection is inserted into the hole, the projection is guided into the hole by the guide portion of the projection. Therefore, the assembling work can be facilitated without a large clearance between the projection and the hole.

A door leaf that achieves the above object comprises: at least two frames, each including two face plates and a side plate, the two face plates being disposed on opposite surface sides of the door leaf so as to be opposed to each other, the side plate being positioned on a lateral side of the door leaf and connected to the two face plates to form a U-shaped section, the face plates and the side plate being positioned relative to each other by a projection and a hole, the projection being provided on one of the side plate and the face plates, the hole being provided in the other, the two face plates being fastened to a fastening member; and surface plates joined to the face plates of the at least two frames.

With the above configuration, a door leaf can be manufactured with a side plate having a desired shape, instead of a molded material that needs to be modified by a skilled expert. In this manufacturing process, the two face plates and the side plate are positioned relative to each other by a projection and a hole, the two face plates are fastened to a fastening member, and the surface plates are joined to the face plates. Accordingly, the door leaf can be manufactured easily.

A method of manufacturing a door leaf frame that achieves the above object comprises: a first positioning step of fitting a projection into a hole for positioning, the projection being provided on one of a first face plate and a side plate, the hole being provided in the other, the first face plate being disposed on one surface side of a door leaf, the side plate being positioned on a lateral side of the door leaf; a first joining step of joining the first face plate and a fastening member; a second positioning step of fitting a projection into a hole for positioning, the projection being provided on one of a second face plate and the side plate, the hole being provided in the other, the second face plate being disposed on the other surface side of the door leaf; and a second joining step of joining the second face plate and the fastening member.

With the above configuration, a door leaf frame can be manufactured with a side plate having a desired shape, instead of a molded material that needs to be modified by a skilled expert. In this manufacturing process, the two face plates and the side plate are positioned relative to each other by a projection and a hole, and the two face plates are fastened to a fastening member. Accordingly, the door leaf frame can be manufactured easily.

The above method of manufacturing a door leaf frame preferably further comprises a core disposing step of disposing a core between the first face plate and the second face plate before the second joining step.

With the above configuration, since the core is disposed between the first face plate and the second face plate, the core can be disposed easily in the door leaf frame.
Fig. 1 is a front view of a door leaf.
Fig. 2 is a cross sectional view of the door leaf cut along the line 2-2 in Fig. 1.
Fig. 3 is an exploded view of the door leaf.
Part (a) of Fig. 4 is a side view of the door leaf, and Part (b) of Fig. 4 is a side view showing the shape of a side plate of a door leaf frame.
Fig. 5 is a front view showing the shape of a face plate of the door leaf frame.
Fig. 6 is an enlarged side view showing the shape of the side plate of the door leaf frame.
Fig. 7 is an enlarged front view showing the shape of the face plate of the door leaf frame.
Fig. 8 is a perspective view showing the shape of a fastening member of the door leaf frame.
Fig. 9 is a perspective view showing the shape of a fastening member of the door leaf frame.
Parts (a), (b), and (c) of Fig. 10 are cross sectional views showing a method of manufacturing the door leaf frame.
Parts (a), (b), and (c) of Fig. 11 are cross sectional views showing a method of manufacturing the door leaf frame.
Fig. 12 shows a variation of holes in the face plate of the door leaf frame.
Fig. 13 shows a variation of the holes in the face plate of the door leaf frame.
Fig. 14 shows a variation of a projection on the side plate of the door leaf frame.
Parts (a) and (b) of Fig. 15 show a variation of the projection on the side plate of the door leaf frame.
Parts (a) and (b) of Fig. 16 show a variation of the projection on the side plate of the door leaf frame.
Parts (a) and (b) of Fig. 17 show a variation of the projection on the side plate of the door leaf frame.

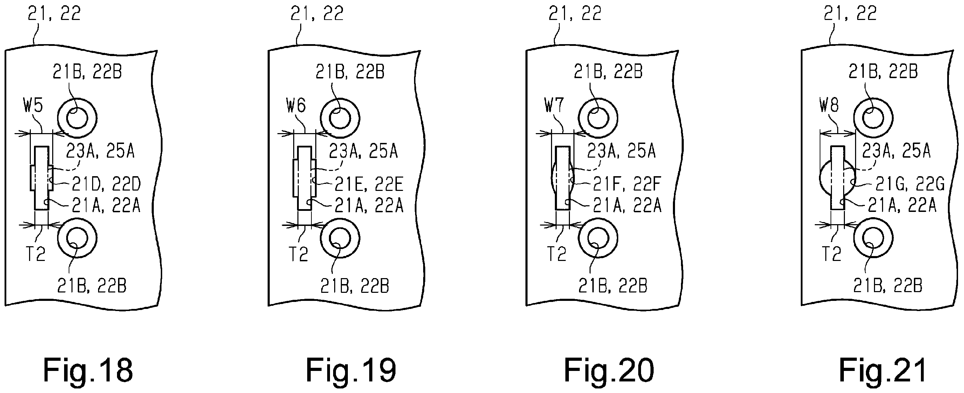

Fig. 18 shows a variation of the holes in the face plate of the door leaf frame.
Fig. 19 shows a variation of the holes in the face plate of the door leaf frame.
Fig. 20 shows a variation of the holes in the face plate of the door leaf frame.
Fig. 21 shows a variation of the holes in the face plate of the door leaf frame.

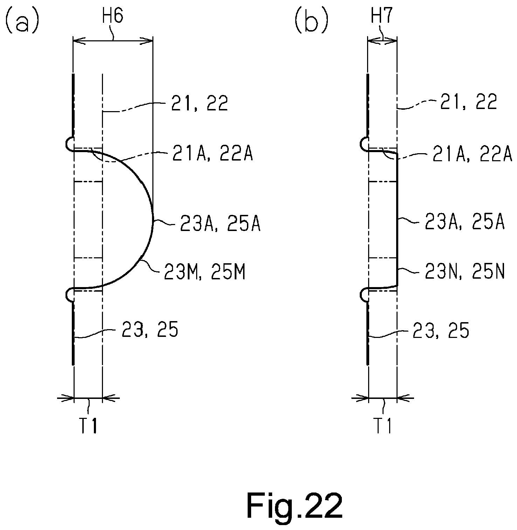

Parts (a) and (b) of Fig. 22 show a variation of working of the projection on the side plate of the door leaf frame.

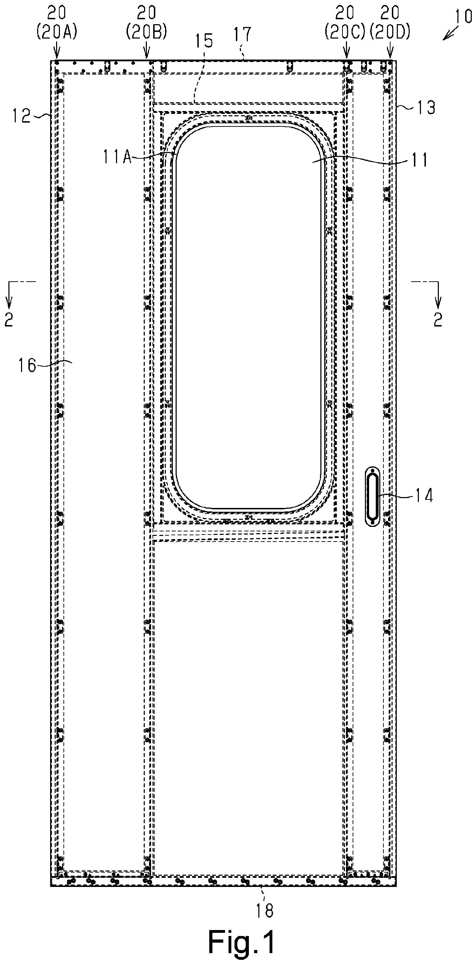

With reference to Figs. 1 to 11, a description will be hereinafter given of an embodiment of a door leaf frame, a door leaf, and a method of manufacturing the door leaf frame. A door leaf having a door leaf frame is used for a door of a railroad car. The door is a biparting door.

### < Door Leaf >

As shown in Fig. 1, a door leaf 10 has a window 11 provided in the upper middle portion thereof. In the drawing, the left side of the door leaf 10 is a trailing edge 12, and the right side of the door leaf 10 is a leading edge 13. Embedded door handles 14 are provided in a vertically middle portion of the door leaf 10.

The door leaf 10 includes four door leaf frames 20 extending in a vertical direction, a window frame 15 supporting a glass plate 11A of the window 11, and surface plates 16 serving as panels joined to the surfaces of the door leaf frames 20. The door leaf frames 20 are fixed by an upper lateral frame 17 and a lower lateral frame 18 extending in the horizontal direction of the door leaf 10.

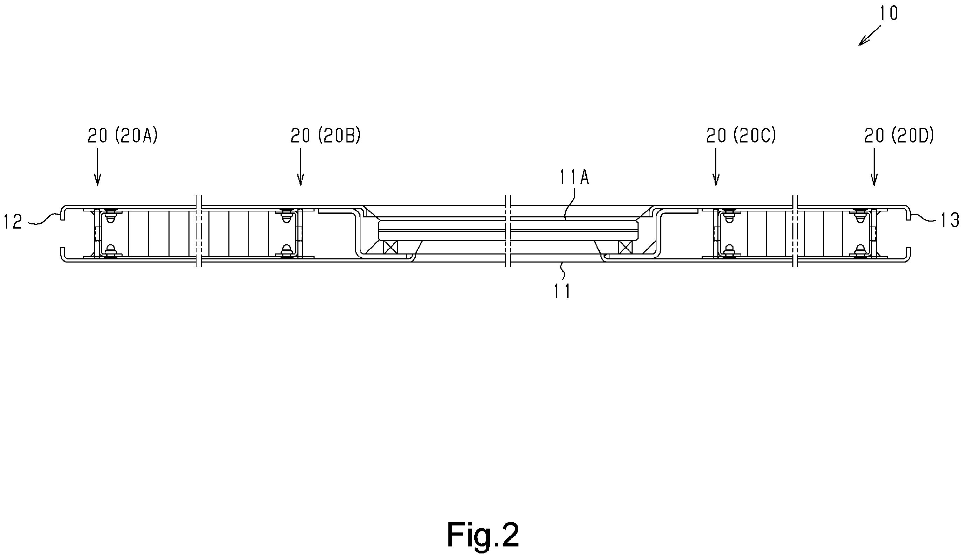

As shown in Fig. 2, the door leaf 10 includes a first door leaf frame 20A, a second door leaf frame 20B, a third door leaf frame 20C, and a fourth door leaf frame 20D. The first door leaf frame 20A and the second door leaf frame 20B are provided on the left side, or the trailing edge 12 side of the window 11, and the third door leaf frame 20C and the fourth door leaf frame 20D are provided on the right side, or the leading edge 13 side of the window 11. The window frame 15 is connected between the second door leaf frame 20B and the third door leaf frame 20C via the surface plates 16, and the glass plate 11A of the window 11 is fitted and fixed in the window frame 15.

### < Door Leaf Frames >

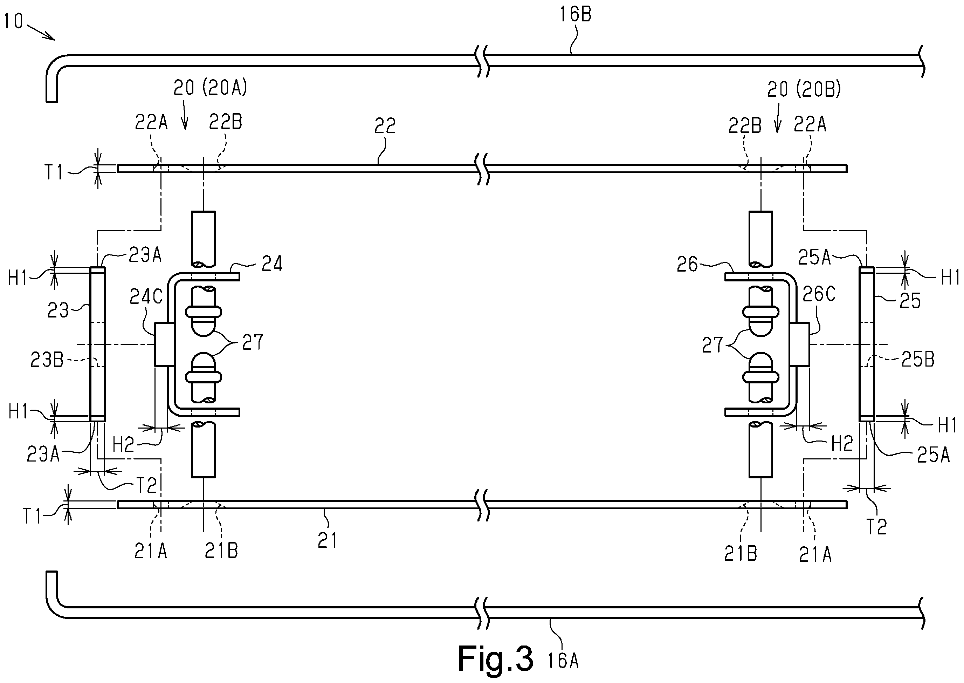

Next, the structure of the door leaf frames 20 will be described with reference to Figs. 3 to 9. The following description will be focused on the first door leaf frame 20A and the second door leaf frame 20B on the trailing edge 12 side. The basic configuration is the same between the combination of the first door leaf frame 20A and the second door leaf frame 20B and the combination of the third door leaf frame 20C and the fourth door leaf frame 20D, except for the difference between the leading edge 12 portion and the trailing edge 13 portion (not shown).

As shown in Fig. 3, the first door leaf frame 20A includes a first face plate 21 and a second face plate 22, a first side plate 23, and first fastening brackets 24 as fastening members. The first face plate 21 and the second face plate 22 are disposed on the opposite surface sides of the door leaf 10 so as to be opposed to each other. The first side plate 23 is positioned on the lateral side of the door leaf 10 and connected to the first face plate 21 and the second face plate 22 to form a U-shaped section. The first fastening brackets 24 are fastened to the first face plate 21 and the second face plate 22. The second door leaf frame 20B includes a first face plate 21 and a second face plate 22, a second side plate 25, and second fastening brackets 26 as fastening members. The first face plate 21 and the second face plate 22 are disposed on the opposite surface sides of the door leaf 10 so as to be opposed to each other. The second side plate 25 is positioned on the lateral side of the door leaf 10 and connected to the first face plate 21 and the second face plate 22 to form a U-shaped section. The second fastening brackets 26 are fastened to the first face plate 21 and the second face plate 22. The first face plate 21 and the second face plate 22 are made of a stainless steel such as SUS. The first side plate 23 and the second side plate 25 are made of aluminum.

Each of the first door leaf frame 20A, the second door leaf frame 20B, the third door leaf frame 20C, and the fourth door leaf frame 20D contains a core 19. The core 19 is made of an aluminum honeycomb and used for increasing the strength of the door leaf 10.

The first face plate 21 of the first door leaf frame 20A, which is positioned in the lower side of the drawing, is continuous with and the same as the first face plate 21 of the second door leaf frame 20B. The first face plate 21 is joined to a first surface plate 16A that covers the first face plate 21. The first surface plate 16A projects from an end of the first face plate 21 on the trailing edge 12 side and an end of the same on the leading edge 13 side (see Fig. 2).

The second face plate 22 of the first door leaf frame 20A, which is positioned in the upper side of the drawing, is continuous with and the same as the second face plate 22 of the second door leaf frame 20B. The second face plate 22 is joined to a second surface plate 16B that covers the second face plate 22. The second surface plate 16B projects from an end of the second face plate 22 on the trailing edge 12 side and an end of the same on the leading edge 13 side (see Fig. 2).

The first side plate 23 and the second side plate 25 include side plate projections 23A and side plate projections 25A, respectively, each having a height H1 corresponding to the thickness T1 of the first face plate 21 and the second face plate 22. The height H1 of the side plate projections 23A, 25A is equal to or smaller than the thickness T1 of the first face plate 21 and the second face plate 22. Therefore, the side plate projections 23A, 25A do not project from the surfaces of the first face plate 21 and the second face plate 22. The first face plate 21 and the second face plate 22 have face plate holes 21A and face plate holes 22A, respectively, formed therein. The side plate projections 23A, 25A are fitted in the face plate holes 21A, 22A. The face plate holes 21A, 22A are through-holes. The positioning of the first face plate 21 and the second face plate 22 relative to the first side plate 23 and the second side plate 25 is accomplished by fitting the side plate projections 23A, 25A in the face plate holes 21A, 22A.

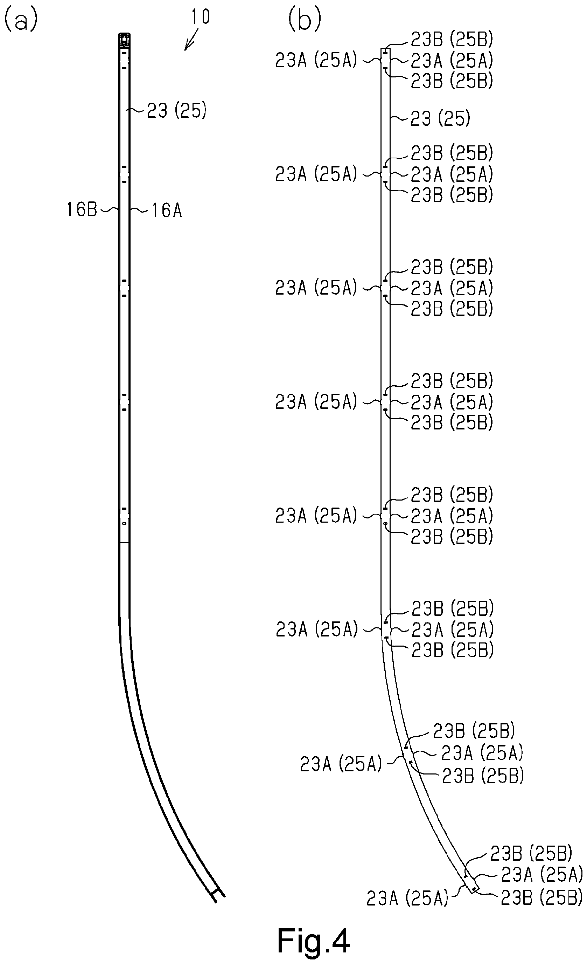

As shown in Part (a) of Fig. 4, the longitudinal section of the door leaf 10 is curved at its vertically lower portion toward the inside of the railroad car. The first side plate 23 and the second side plate 25 extend to the upper and lower ends of the door leaf 10 in the vertical direction thereof. Therefore, as shown in Part (b) of Fig. 4, the first side plate 23 and the second side plate 25 are cut out by laser cutting from a plate material into a shape conforming to the curve of the door leaf 10.

The first side plate 23 and the second side plate 25 have the side plate projections 23A, 25A, respectively, provided at eight locations spaced in the vertical direction. When the first side plate 23 and the second side plate 25 are cut out from a plate material, the side plate projections 23A, 25A are also cut out from the plate material by laser cutting or the like along with the first side plate 23 and the second side plate 25.

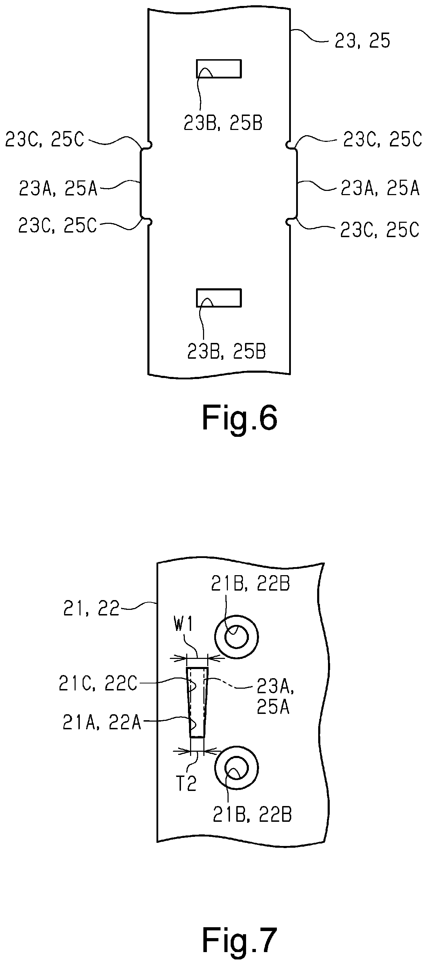

As shown in Fig. 6, the side plate projections 23A of the first side plate 23 and the side plate projections 25A of the second side plate 25 include guide portions 23C, 25C for guiding the side plate projections 23A, 25A into the face plate holes 21A of the first face plate 21 and the face plate holes 22A of the second face plate 22. The guide portions 23C, 25C are rounded corners in edge portions of the side plate projections 23A, 25A.

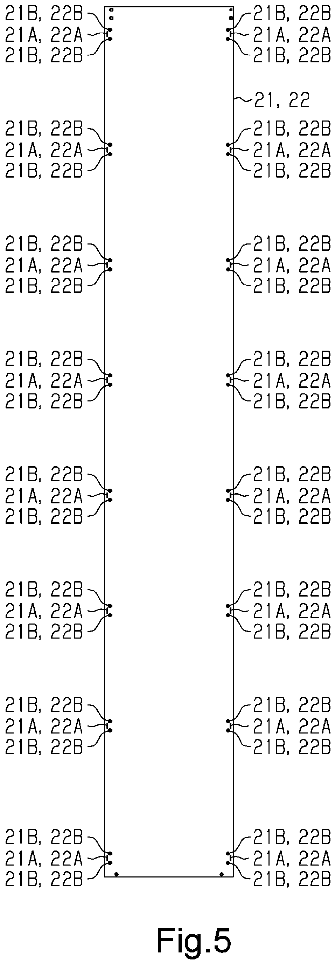

As shown in Fig. 5, the first face plate 21 and the second face plate 22 extend to the upper and lower ends of the door leaf 10 in the vertical direction thereof. The first face plate 21 and the second face plate 22 have the face plate holes 21A, 22A, respectively, provided at eight locations spaced in the vertical direction. The face plate holes 21A, 22A are formed in the first face plate 21 and the second face plate 22 by laser cutting.

As shown in Fig. 7, the face plate holes 21A of the first face plate 21 and the face plate holes 22A of the second face plate 22 include wide portions 21C, 22C for guiding the side plate projections 23A of the first side plate 23 and the side plate projections 25A of the second side plate 25 into the face plate holes 21A, 22A. The wide portions 21C, 22C are wider upward in the vertical direction. The opening width W1 of the wide portions 21C, 22C is larger than the thickness T2 of the side plate projections 23A, 25A of the first side plate 23 and the second side plate 25 indicated by the chain double-dashed line in Fig. 7 (W1 > T2).

As shown in Fig. 3, the first fastening brackets 24 and the second fastening brackets 26 include bracket projections 24C, 26C, respectively, each having a height H2 corresponding to the thickness T2 of the first side plate 23 and the second side plate 25. The first side plate 23 and the second side plate 25 have side plate holes 23B, 25B receiving the bracket projections 24C, 26C fitted therein. The side plate holes 23B, 25B are through-holes. The positioning of the first fastening brackets 24 and the second fastening brackets 26 relative to the first side plate 23 and the second side plate 25 is accomplished by fitting the bracket projections 24C, 26C in the side plate holes 23B, 25B.

The first fastening brackets 24 are mounted to the surface of the first side plate 23 opposite to the surface on the trailing edge 12 side. The second fastening brackets 26 are mounted to the surface of the second side plate 25 opposite to the surface on the leading edge 13 side. Therefore, the first fastening brackets 24 and the second fastening brackets 26 are positioned closer to the inside of the door leaf 10 than are the first side plate 23 and the second side plate 25.

The first fastening brackets 24 and the second fastening brackets 26 are fastened to the first face plate 21 and the second face plate 22 with blind rivets 27. The first face plate 21 and the second face plate 22 have through-holes 21B, 22B, respectively, penetrated by the blind rivets 27. The blind rivets 27 penetrate from the outside to the inside of the door leaf frames 20 with portions thereof exposed outward of the first face plate 21 and the second face plate 22 caulked.

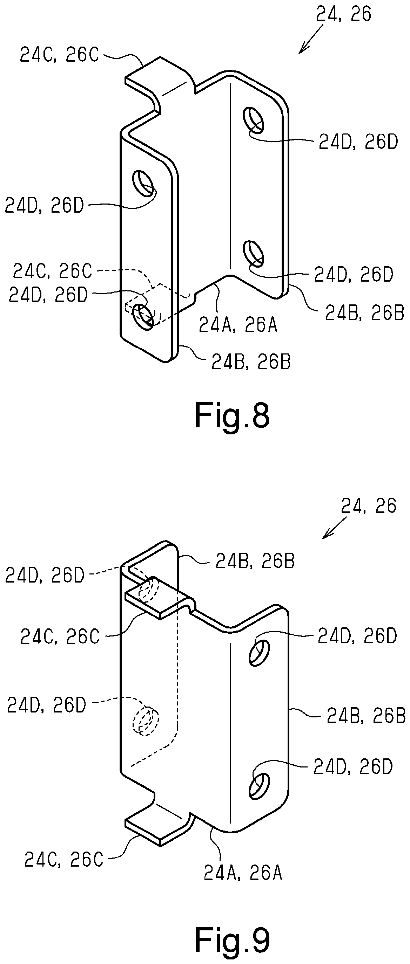

As shown in Figs. 8 and 9, the first fastening bracket 24 and the second fastening bracket 26 have a U-shaped section. The first fastening bracket 24 and the second fastening bracket 26 include a base portion 24A, 26A, a pair of erected portions 24B, 26B, and a pair of bracket projections 24C, 26C. The base portions 24A, 26A contact with surfaces of the first side plate 23 and the second side plate 25. The pair of erected portions 24B, 26B are continuous to lateral sides of the base portions 24A, 26A and erected perpendicular to the base portions 24A, 26A. The pair of bracket projections 24C, 26C are continuous to the upper and lower ends of the base portions 24A, 26A and erected perpendicular to the base portions 24A, 26A in the opposite direction than are the erected portions 24B, 26B. The erected portions 24B, 26B each have two through-holes 24D, 26D formed therein to be penetrated by the blind rivets 27.

As shown in Fig. 5, the first face plate 21 and the second face plate 22 have pairs of through-holes 21B, 22B, respectively, penetrated by the blind rivets 27. These pairs of through-holes 21B, 22B are provided at eight locations spaced in the vertical direction. The first fastening brackets 24 and the second fastening brackets 26 are disposed at each of the locations of the face plate holes 21A, 22A and the pairs of through-holes 21B, 22B of the first face plate 21 and the second face plate 22. Therefore, the first side plate 23 and the second side plate 25 have eight first fastening brackets 24 and eight second fastening brackets 26, respectively, provided thereon.

As shown in Fig. 3, the through-holes 21B, 22B of the first face plate 21 and the second face plate 22 have a section with a diameter larger outward. The caulked portions of the blind rivets 27 are cut to be contained in the through-holes 21B, 22B of the first face plate 21 and the second face plate 22.

As shown in Fig. 4, the first side plate 23 and the second side plate 25 have pairs of side plate holes 23B, 25B, respectively, provided at eight locations spaced in the vertical direction. The pairs of side plate holes 23B, 25B are formed in the first side plate 23 and the second side plate 25 by laser cutting or the like.

### < Manufacturing Method >

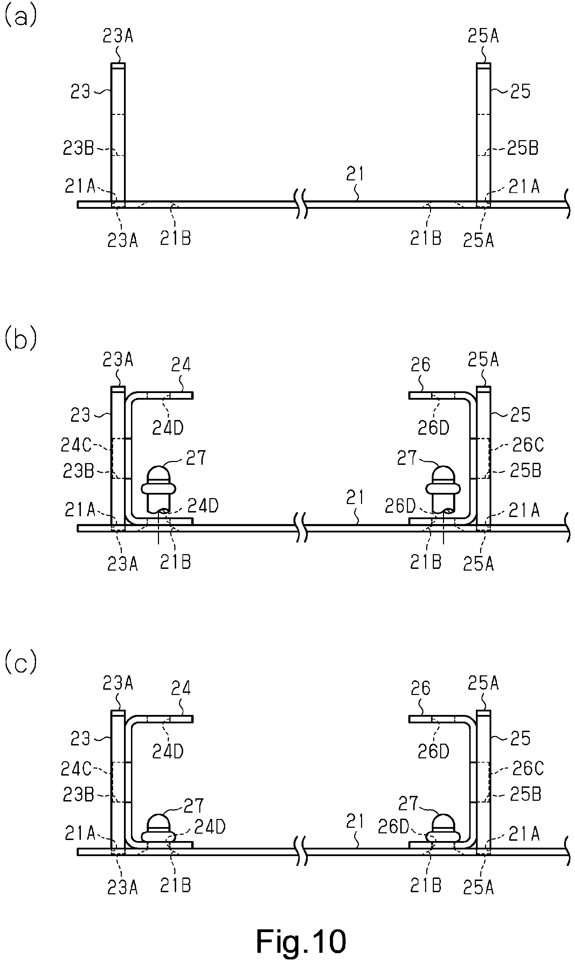

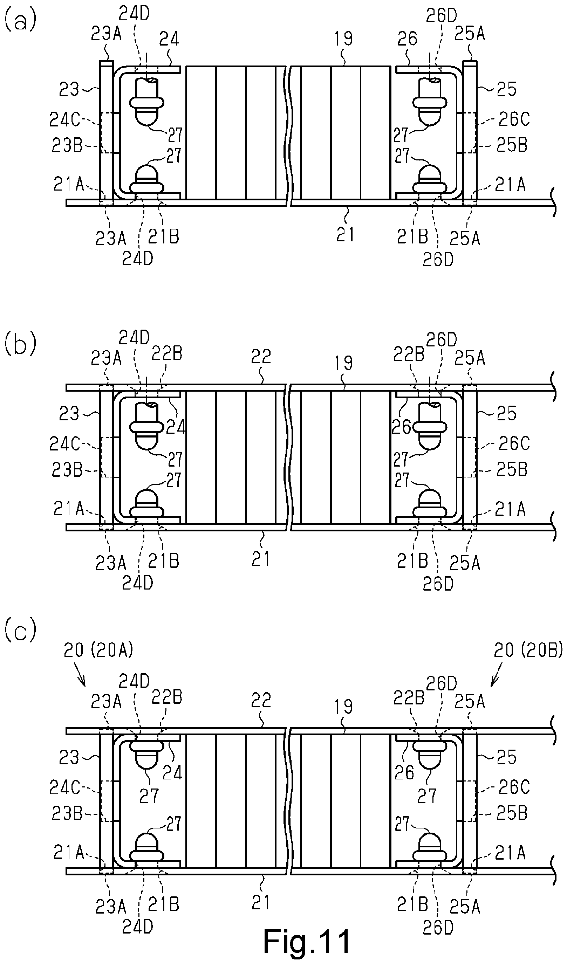

Next, a method of manufacturing the door leaf frames 20 and the door leaf 10 will be described with additional reference to Figs. 10 and 11.

First, the first face plate 21 and the second face plate 22 shown in Fig. 5 are cut out from a stainless steel plate material by laser cutting. The face plate holes 21A, 22A are formed in the plates cut out, and the through-holes 21B, 22B are formed by drilling in the plates cut out. The inner walls of the through-holes 21B, 22B have a tapered shape with a diameter larger toward the surface sides of the first face plate 21 and the second face plate 22. Since the first face plate 21 and the second face plate 22 are cut out by laser cutting, no mold is necessary, making it possible to manufacture a wide variety of face plates in small quantities in accordance with the shapes of the railroad cars.

The first side plate 23 and the second side plate 25 shown in Fig. 4 are cut out from an aluminum plate material by laser cutting. At the same time, the side plate projections 23A, 25A are formed. The side plate holes 23B, 25B are formed in the plates cut out. Since the first side plate 23 and the second side plate 25 are cut out by laser cutting, no mold is necessary, making it possible to manufacture a wide variety of side plates in small quantities in accordance with the shapes of the railroad cars.

Next, as shown in Part (a) of Fig. 10, the first face plate 21 is assembled to the first side plate 23 and the second side plate 25 by joining with the projections. This is the first positioning step in which the side plate projections 23A of the first side plate 23 and the side plate projections 25A of the second side plate 25 are fitted into the face plate holes 21A of the first face plate 21 for positioning. At this time, the guide portions 23C, 25C of the side plate projections 23A, 25A contact with the face plate holes 21A for guiding. This facilitates insertion of the side plate projections 23A, 25A into the face plate holes 21A. Even when the side plate projections 23A, 25A are misaligned with the face plate holes 21A, the side plate projections 23A, 25A are inserted into the wide portions 21C of the face plate holes 21A and thus guided. This facilitates insertion of the side plate projections 23A, 25A into the face plate holes 21A.

Next, as shown in Part (b) of Fig. 10, the first fastening brackets 24 are assembled to the first side plate 23, and the second fastening brackets 26 are assembled to the second side plate 25. That is, the bracket projections 24C of the first fastening brackets 24 are inserted into the side plate holes 23B of the first side plate 23, so as to position the first fastening brackets 24 relative to the first side plate 23.

Next, the blind rivets 27 for fastening the first face plate 21 are inserted into the through-holes 24D, 26D of the first fastening brackets 24 and the second fastening brackets 26 on the first face plate 21 side and the through-holes 21B of the first face plate 21.

Next, as shown in Part (c) of Fig. 10, the first joining step is performed, in which the blind rivets 27 for fastening the first fastening brackets 24 and the first face plate 21 are caulked outside the first face plate 21. Also, the blind rivets 27 for fastening the second fastening brackets 26 and the first face plate 21 are caulked outside the first face plate 21. The caulked portions of the blind rivets 27 are cut to be contained in the through-holes 21B of the first face plate 21.

Next, as shown in Part (a) of Fig. 11, before the core 19 is disposed, the blind rivets 27 for fastening the second face plate 22 are inserted into the through-holes 24D, 26D of the first fastening brackets 24 and the second fastening brackets 26 on the second face plate 22 side.

Next, the core disposing step is performed, in which the core 19 is inserted into the space surrounded by the first face plate 21, the first side plate 23, and the second side plate 25. An adhesive is applied to the surface of the first face plate 21 contacted by the core 19. The core 19 is fixedly bonded to the first face plate 21 with the adhesive.

Next, the upper lateral frame 17 and the lower lateral frame 18 are fixed to the second face plate 22. In this way, the work is fixed with frames in the horizontal direction, in addition to the vertical direction of the door leaf 10.

Next, as shown in Part (b) of Fig. 11, the second face plate 22 is assembled to the first side plate 23 and the second side plate 25 by joining with the projections. This is the second positioning step in which the side plate projections 23A of the first side plate 23 and the side plate projections 25A of the second side plate 25 are fitted into the face plate holes 22A of the second face plate 22 for positioning. At this time, the guide portions 23C, 25C of the side plate projections 23A, 25A contact with the face plate holes 22A for guiding. This facilitates insertion of the side plate projections 23A, 25A into the face plate holes 22A. Even when the side plate projections 23A, 25A are misaligned with the face plate holes 22A, the side plate projections 23A, 25A are inserted into the wide portions 22C of the face plate holes 22A and thus guided. This facilitates insertion of the side plate projections 23A, 25A into the face plate holes 22A.

Next, as shown in Part (c) of Fig. 11, the second joining step is performed, in which the blind rivets 27 for fastening the first fastening brackets 24 and the second face plate 22 are caulked outside the second face plate 22. Also, the blind rivets 27 for fastening the second fastening brackets 26 and the second face plate 22 are caulked outside the second face plate 22. The caulked portions of the blind rivets 27 are cut to be contained in the through-holes 22B of the second face plate 22. In this way, the door leaf frames 20 are manufactured.

Next, the first surface plate 16A is stuck to the first face plate 21. More specifically, an adhesive is applied to the surface side of the first face plate 21, and the first surface plate 16A is joined thereto so as to cover the first face plate 21. Also, the second surface plate 16B is stuck to the second face plate 22. More specifically, an adhesive is applied to the surface side of the second face plate 22, and the second surface plate 16B is joined thereto so as to cover the second face plate 22.

Next, embedded door handles 14 are mounted to the surface plates 16. A shock-absorber (not shown) such as a rubber is mounted to each of the trailing edge 12 and the leading edge 13. Other necessary members are also mounted in accordance with the railroad cars. In this way, the door leaf 10 is manufactured.

The door leaf frames 20 manufactured as described above are structured with plate materials instead of molded materials made of aluminum or stainless steel, making it possible to manufacture a wide variety of door leaf frames in small quantities. Also, the side plates of the door leaf frames 20 are cut out into a desired shape instead of bending, making it possible to ensure the accuracy of the shape of the door leaf frames 20 independently of craftsmanship. In addition, the door leaf frames 20 are assembled using projections and holes instead of welding or the like that requires qualified skills, making it possible that the manufacturing of the door leaf frames 20 is accomplished by unqualified assemblers.

Advantageous effects of the embodiment will be now described.
(1) The positioning of the first face plate 21 and the second face plate 22 relative to the first side plate 23 and the second side plate 25 is accomplished by the side plate projections 23A, 25A and the face plate holes 21A, 22A, and the first face plate 21 and the second face plate 22 are fastened to the first fastening brackets 24 and the second fastening brackets 26. Therefore, the door leaf frames 20 can be manufactured with the first side plate 23 and the second side plate 25 having a desired shape, instead of molded materials that need to be modified by a skilled expert. Accordingly, the door leaf frames 20 can be manufactured easily.
(2) The first face plate 21 and the second face plate 22 have the face plate holes 21A, 22A instead of projections. Therefore, the first face plate 21 and the second face plate 22 can be worked easily. This is beneficial particularly because the first face plate 21 and the second face plate 22 extend in the lateral direction of the door leaf 10 beyond the first side plate 23 and the second side plate 25.
(3) The positioning of the first fastening brackets 24 and the second fastening brackets 26 relative to the first side plate 23 and the second side plate 25 is accomplished by the bracket projections 24C, 26C and the side plate holes 23B, 25B. Therefore, the first fastening brackets 24 and the second fastening brackets 26 can be inhibited from moving when the first face plate 21 and the second face plate 22 are fastened to the first fastening brackets 24 and the second fastening brackets 26.
(4) The door leaf 10 has a curved shape in which the longitudinal sections of the first face plate 21 and the second face plate 22 are curved. Therefore, it is advantageous that the door leaf frames 20 can be manufactured easily without using molded materials subjected to a bending process in conformity to the curved shape.
(5) When the projections are inserted into the holes, the projections are guided into the holes by the wide portions of the holes, and therefore, the assembling work can be facilitated without a large clearance between the projections and the holes.
(6) When the side plate projections 23A, 25A are inserted into the face plate holes 21A, 22A, the side plate projections 23A, 25A are guided by the guide portions 23C, 25C of the side plate projections 23A, 25A into the face plate holes 21A, 22A. Therefore, the assembling work can be facilitated without a large clearance between the side plate projections 23A, 25A and the face plate holes 21A, 22A.
(7) The core 19 is inserted into the space surrounded by the first face plate 21, the first side plate 23, the second side plate 25, and the second face plate 22. Therefore, the core 19 can be disposed easily in the door leaf frames 20.

### < Other Embodiments >

The foregoing embodiment can be modified as described below. The above embodiment and the following modifications can be implemented in combination to the extent where they are technically consistent to each other.

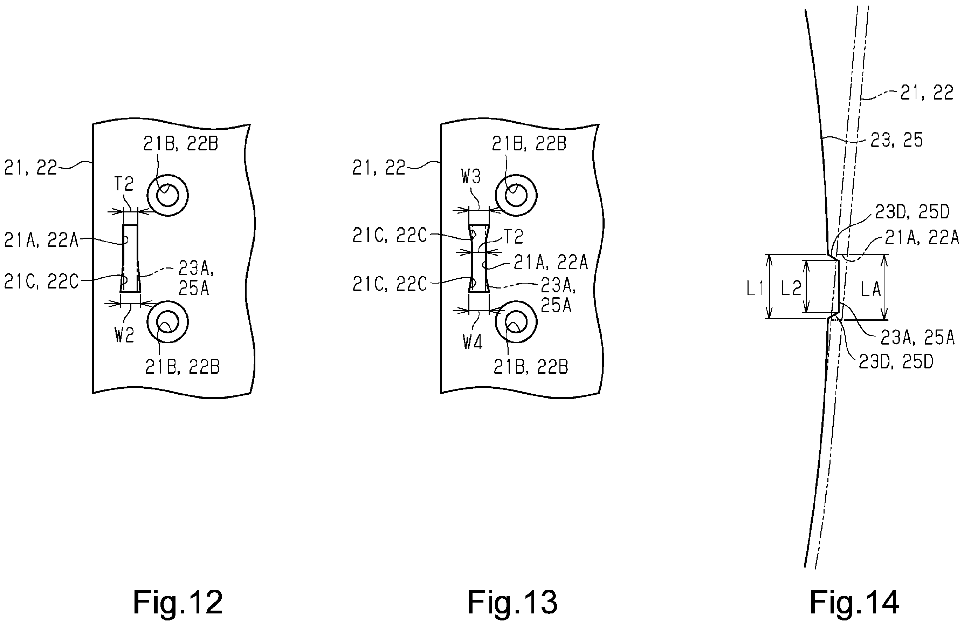

In the above configuration, the wide portions 21C, 22C are provided in the upper side of the face plate holes 21A, 22A in the vertical direction. Alternatively, as shown in Fig. 12, the wide portions 21C, 22C wider downward may be provided in the lower side of the face plate holes 21A, 22A in the vertical direction. The opening width W2 of the wide portions 21C, 22C is larger than the thickness T2 of the side plate projections 23A, 25A of the first side plate 23 and the second side plate 25 indicated by the chain double-dashed line in Fig. 12 (W2 > T2). This facilitates that the first face plate 21 and the second face plate 22 can be assembled to the first side plate 23 and the second side plate 25 from the lower side in the vertical direction.

As shown in Fig. 13, it is also possible that the wide portions 21C, 22C wider toward the upper and lower ends are provided in the upper and lower sides of the face plate holes 21A, 22A in the vertical direction. The opening widths W3, W4 of the wide portions 21C, 22C are larger than the thickness T2 of the side plate projections 23A, 25A of the first side plate 23 and the second side plate 25 indicated by the chain double-dashed line in Fig. 13 (W3, W4 > T2). This facilitates that the first face plate 21 and the second face plate 22 can be assembled to the first side plate 23 and the second side plate 25 from both the upper side and the lower side in the vertical direction.

In the above configuration, as shown in Fig. 14, guide portions 23D, 25D may be provided in the side plate projections 23A, 25A of the first side plate 23 and the second side plate 25. The length of the guide portions 23D, 25D in the vertical direction is smaller toward the distal end than the length LA of the face plate holes 21A, 22A of the first face plate 21 and the second face plate 22 in the vertical direction (LA = L1 > L2). In other words, the side surfaces of the side plate projections 23A, 25A are sloped. This facilitates insertion of the side plate projections 23A, 25A into the face plate holes 21A, 22A, thus facilitating the assembling work.

In the above configuration, it is also possible that the side plate projections 23A, 25A of the first side plate 23 and the second side plate 25 include guide portions having a sloped distal end edge, such that the height of the side plate projections 23A, 25A is the largest at the vertically middle portions thereof. This facilitates that when the side plate projections 23A, 25A are inserted into the face plate holes 21A, 22A, the side plate projections 23A, 25A are guided by the guide portions of the side plate projections 23A, 25A into the face plate holes 21A, 22A.

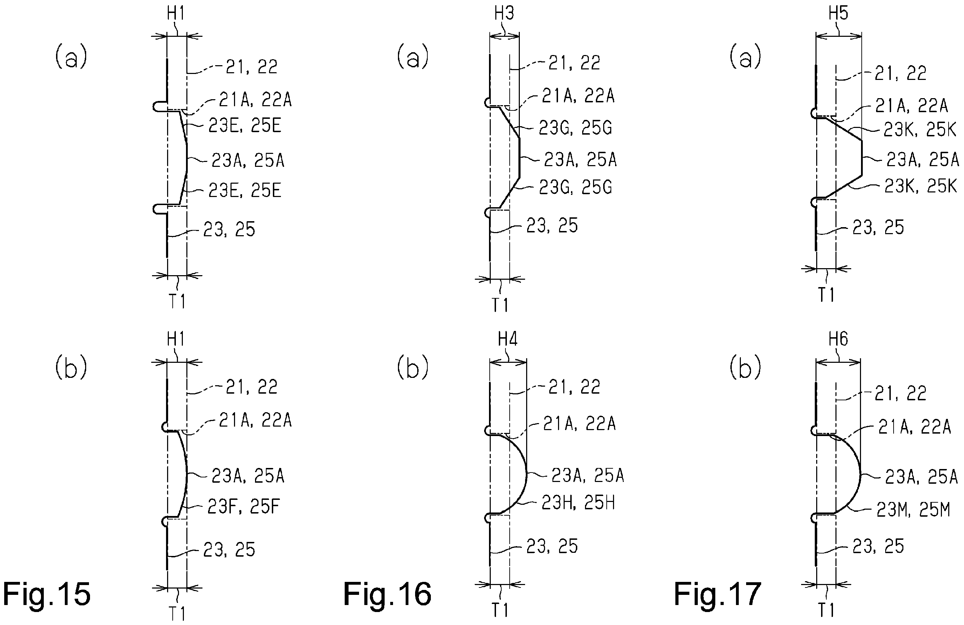

For example, the guide portions 23E, 25E shown in Part (a) of Fig. 15 are sloped surfaces with a height descending toward the upper end and the lower end of the distal end edges of the side plate projections 23A, 25A. The height H1 of the side plate projections 23A, 25A is equal to or smaller than the thickness T1 of the first face plate 21 and the second face plate 22 (H1 ≤ T1). The guide portions 23F, 25F shown in Part (b) of Fig. 15 are arc surfaces provided in the distal end edges of the side plate projections 23A, 25A. The height H1 of the side plate projections 23A, 25A is equal to or smaller than the thickness T1 of the first face plate 21 and the second face plate 22 (H1 ≤ T1). The guide portions 23G, 25G shown in Part (a) of Fig. 16 are sloped surfaces with a height descending toward the upper end and the lower end of the distal end edges of the side plate projections 23A, 25A. The height H3 of the side plate projections 23A, 25A is larger than the thickness T1 of the first face plate 21 and the second face plate 22 (H3 > T1). The guide portions 23H, 25H shown in Part (b) of Fig. 16 are arc surfaces provided in the distal end edges of the side plate projections 23A, 25A. The height H4 of the side plate projections 23A, 25A is larger than the thickness T1 of the first face plate 21 and the second face plate 22 (H4 > T1). The guide portions 23K, 25K shown in Part (a) of Fig. 17 are sloped surfaces with a height descending toward the upper end and the lower end of the distal end edges of the side plate projections 23A, 25A. The height H5 of the side plate projections 23A, 25A is larger than double the thickness T1 of the first face plate 21 and the second face plate 22 (H5 > 2 × T1). The guide portions 23M, 25M shown in Part (b) of Fig. 17 are arc surfaces provided in the distal end edges of the side plate projections 23A, 25A. The height H6 of the side plate projections 23A, 25A is larger than double the thickness T1 of the first face plate 21 and the second face plate 22 (H6 > 2 × T1).

In the above configuration, wide portions may be provided in the vertically middle portions of the face plate holes 21A of the first face plate 21 and the face plate holes 22A of the second face plate 22, so as to guide the side plate projections 23A, 25A of the first side plate 23 and the second side plate 25 into the face plate holes 21A, 22A. This facilitates that when the side plate projections 23A, 25A are inserted into the face plate holes 21A, 22A, the side plate projections 23A, 25A, particularly those projecting at a vertically middle portion thereof as in the above modification examples, are guided by the wide portions of the face plate holes 21A, 22A.

For example, the wide portions 21D, 22D shown in Fig. 18 are provided in the vertically middle portions of the face plate holes 21A, 22A so as to have a rectangular shape with an opening width W5. The opening width W5 of the wide portions 21 D, 22D is larger than the thickness T2 of the first side plate 23 and the second side plate 25 (W5 > T2). The wide portions 21E, 22E shown in Fig. 19 are provided in the vertically middle portions of the face plate holes 21A, 22A so as to have a rectangular shape with an opening width W6. The wide portions 21E, 22E are longer in the vertical direction than the wide portions 21 D, 22D shown in Fig. 18. The opening width W6 of the wide portions 21E, 22E is larger than the thickness T2 of the first side plate 23 and the second side plate 25 (W6 > T2). The wide portions 21F, 22F shown in Fig. 20 are provided in the vertically middle portions of the face plate holes 21A, 22A so as to have an arc shape with a maximum opening width W7. The maximum opening width W7 of the wide portions 21F, 22F is larger than the thickness T2 of the first side plate 23 and the second side plate 25 (W7 > T2). The wide portions 21G, 22G shown in Fig. 21 are provided in the vertically middle portions of the face plate holes 21A, 22A so as to have an arc shape with a maximum opening width W8. The maximum opening width W8 of the wide portions 21G, 22G is larger than the maximum opening width W7 of the wide portions 21F, 22F shown in Fig. 20 (W8 > W7). The maximum opening width W8 of the wide portions 21G, 22G is larger than the thickness T2 of the first side plate 23 and the second side plate 25 (W8 > T2).

In the above configuration, when the height H6 of the side plate projections 23A, 25A is larger than the thickness T1 of the first face plate 21 and the second face plate 22, as shown in Part (a) of Fig. 22, the side plate projections 23A, 25A project on the surface sides of the first face plate 21 and the second face plate 22. In this case, after the projections and the holes are assembled together, as shown in Part (b) of Fig. 22, the portions projecting from the first face plate 21 and the second face plate 22 may be cut such that the side plate projections 23A, 25A have a height H7 (H7 < H6). This facilitates joining with the projections, and since the cut surfaces 23N, 25N of the side plate projections 23A, 25A are flush with the first face plate 21 and the second face plate 22, the side plate projections 23A, 25A no longer project from the first side plate 21 and the second side plate 22.

In the above configuration, the blind rivets 27 for fastening the first fastening brackets 24 and the second fastening brackets 26 to the first face plate 21 and the second face plate 22 may be replaced with rivets having other shapes.

In the above configuration, the blind rivets 27 are used to fasten the first fastening brackets 24 and the second fastening brackets 26 to the first face plate 21 and the second face plate 22. Alternatively, bolts may be used to fasten the first fastening brackets 24 and the second fastening brackets 26 to the first face plate 21 and the second face plate 22. Further, spot welding or the like may be used to weld the first fastening brackets 24 and the second fastening brackets 26 directly to the first face plate 21 and the second face plate 22. Still further, the first fastening brackets 24 and the second fastening brackets 26 may be coupled directly to the first face plate 21 and the second face plate 22.

The erected portions 24B, 26B may have one, three, or more through-holes 24D, 26D instead of two. In other words, the first fastening brackets 24 and the second fastening brackets 26 may be fastened to the first face plate 21 and the second face plate 22 at one, three, or more locations instead of two.

In the above configuration, an aluminum honeycomb is used as the core 19 disposed between the first face plate 21 and the second face plate 22, but the core 19 can be selected from various materials in accordance with necessary functions.

In the above configuration, the core 19 may be omitted.

In the above embodiments, the materials of the first face plate 21 and the second face plate 22 and the materials of the first side plate 23 and the second side plate 25 can be selected desirably in accordance with the required strength and weight, the material of the surface plates, and so on.

In the above embodiments, the side plate projections 23A, 25A of the first side plate 23 and the second side plate 25 are fitted in the face plate holes 21A, 22A of the first face plate 21 and the second face plate 22. Alternatively, it is possible that projections of the first face plate 21 and the second face plate 22 are fitted in holes provided in the first side plate 23 and the second side plate 25.

In the above embodiments, the door leaf 10 is used for a biparting door, but the door leaf 10 may also be used as a door leaf of a single sliding door or a door leaf of a plug door.

In the above embodiments, the door leaf 10 is curved in the vertical direction, but the door leaf 10 may also be a straight door leaf not curved in the vertical direction.

## Claims

1. A door leaf frame (20), comprising:
two face plates (21, 22) disposed on opposite surface sides of a door leaf so as to be opposed to each other;
a side plate (23, 25) positioned on a lateral side of the door leaf and connected to the two face plates (21, 22) to form a U-shaped section; and
a fastening member (24, 26) fastened to the two face plates (21, 22),
wherein the face plates (21, 22) and the side plate (23, 25) are positioned relative to each other by a projection (23A, 25A) and a hole (21A, 22A), the projection (23A, 25A) is provided on one of the side plate (23, 25) and the face plates (21, 22), and the hole (21A, 22A) is provided in the other.

2. The door leaf frame (20) according to claim 1,
wherein the hole (21A, 22A) is provided in the face plates (21, 22), and
wherein the projection (23A, 25A) is provided on the side plate (23, 25).

3. The door leaf frame (20) according to claim 1 or 2, wherein the fastening member (24, 26) and the side plate (23, 25) are positioned relative to each other by a projection (24C, 26C) and a hole (23B, 25B), the projection (24C, 26C) is provided on one of the fastening member (24, 26) and the side plate (23, 25), and the hole (23B, 25B) is provided in the other.

4. The door leaf frame (20) according to any one of claims 1 to 3, wherein longitudinal sections of the face plates (21, 22) are curved.

5. The door leaf frame (20) according to any one of claims 1 to 4, wherein the hole (21A, 22A) has a wide portion (21C, 22C) for guiding the projection (23A, 25A) into the hole (21A, 22A).

6. The door leaf frame (20) according to any one of claims 1 to 5, wherein the projection (23A, 25A) has a guide portion (23C, 25C) for guiding the projection (23A, 25A) into the hole (21A, 22A).

7. A door leaf (10) comprising:
at least two frames (20), each including two face plates (21, 22) and a side plate (23, 25), the two face plates (21, 22) being disposed on opposite surface sides of the door leaf (10) so as to be opposed to each other, the side plate (23, 25) being positioned on a lateral side of the door leaf (10) and connected to the two face plates (21, 22) to form a U-shaped section, the face plates (21, 22) and the side plate (23, 25) being positioned relative to each other by a projection (23A, 25A) and a hole (21A, 22A), the projection (23A, 25A) being provided on one of the side plate (23, 25) and the face plates (21, 22), the hole (21A, 22A) being provided in the other, the two face plates (21, 22) being fastened to a fastening member (24, 26); and
surface plates (16) joined to the face plates (21, 22) of the at least two frames (20).

8. A method of manufacturing a door leaf frame (20), comprising:
a first positioning step of fitting a projection (23A, 25A) into a hole (21A) for positioning, the projection (23A, 25A) being provided on one of a first face plate (21) and a side plate (23, 25), the hole (21A) being provided in the other, the first face plate (21) being disposed on one surface side of a door leaf, the side plate (23, 25) being positioned on a lateral side of the door leaf;
a first joining step of joining the first face plate (21) and a fastening member (24, 26);
a second positioning step of fitting a projection (23A, 25A) into a hole (22A) for positioning, the projection (23A, 25A) being provided on one of a second face plate (22) and the side plate (23, 25), the hole (22A) being provided in the other, the second face plate (22) being disposed on the other surface side of the door leaf; and
a second joining step of joining the second face plate (22) and the fastening member (24, 26).

9. The method of manufacturing a door leaf frame (20) according to claim 8, further comprising a core disposing step of disposing a core (19) between the first face plate (21) and the second face plate (22) before the second joining step.
